# EUROPÄISCHE PATENTSCHRIFT

(11) **EP 4 230 919 B1**
(45) Veröffentlichungstag und Bekanntmachung des Hinweises auf die Patenterteilung: **01.01.2025**
(21) Anmeldenummer: 22157997.2
(22) Anmeldetag: 22.02.2022
(51) Int. Cl.: F24D 10/00, F24D 11/00, F24D 19/10

(54) **FERNWÄRMEHEIZSYSTEM MIT ÜBERSCHUSS-EINSPEISUNG**
DISTRICT HEATING HEATING SYSTEM WITH EXCESS FEED
SYSTÈME DE CHAUFFAGE À DISTANCE À ALIMENTATION EXCÉDENTAIRE

(43) Veröffentlichungstag der Anmeldung: 23.08.2023
(73) Patentinhaber: aqotec GmbH, 4890 Weissenkirchen im Attergau (AT)
(72) Erfinder: SIX, Florian, 4890 Weissenkirchen im Atterau (AT)
(74) Vertreter: 2s-ip Schramm Schneider Bertagnoll Patent- und Rechtsanwälte Part mbB

(56) Entgegenhaltungen:
- DE-A1- 102011 103 133
- DE-A1- 102013 003 206
- DE-U1- 20 214 086

## Beschreibung

Die Erfindung betrifft ein Fernwärmeheizsystem mit einer Überschuss-Einspeisung, sowie ein Verfahren und ein Computerprogrammprodukt zur Regelung des Fernwärmeheizsystems mit Überschuss-Einspeisung.

In einem Fernwärmeheizsystem dienen Fernwärme-Übergabestationen zur Einspeisung von Fernwärme aus einem Fernwärmenetz in ein Bauwerk. Fernwärmeheizsysteme umfassen eine versorgerseitige Primärseite und eine verbraucherseitige Sekundärseite. Die Primärseite und die Sekundärseite sind in einer Übergabestation zur Wärmeübertragung gekoppelt, beispielsweise durch einen Wärmetauscher.

Auf der Primärseite und auf der Sekundärseite zirkuliert jeweils ein Medium zum Transport von Wärme durch je einen Kreislauf, jeweils umfassend einen Vorlauf und einen Rücklauf. Im primärseitigen Vorlauf wird ein heißes Medium, das Fernwärme trägt, angeliefert. Am Wärmetauscher der Fernwärme-Übergabestation kann die Fernwärme in den sekundärseitigen Vorlauf eingespeist werden. Der primärseitige Rücklauf weist aufgrund der verbraucherseitigen Abnahme von Fernwärme eine entsprechend niedrigere Temperatur auf. Sekundärseitig wird die Wärme des Vorlaufs an verschiedene wärmeabführende Einheiten im Gebäude, zum Beispiel einen Brauchwasserboiler, eine Reihe von Heizkreisen und/oder einen Pufferspeicher ggf. mit nachgeschaltetem Frischwassermodul, oder einen Brauchwasserspeicherladesystem anstatt dem Brauchwasserboiler, verteilt. Im sekundärseitigen Rücklauf weist das Medium der Sekundärseite eine tiefere Temperatur als im sekundärseitigen Vorlauf auf. Somit kann das kalte Medium aus dem sekundärseitigen Rücklauf an der Fernwärme-Übergabestation für einen erneuten Umlauf des Sekundärkreislaufs neue Fernwärme aus dem Primärkreislauf aufnehmen.

Für einen wirtschaftlichen Wirkungsgrad eines Fernwärmenetzes ist ein möglichst großer Temperaturunterschied zwischen dem primärseitigen Vorlauf und dem primärseitigen Rücklauf wünschenswert. Auf diese Weise kann versorgerseitig sichergestellt werden, dass die über den Primärkreislauf angelieferte Fernwärme verbraucherseitig zu einem erheblichen Anteil abgenommen wird, und nicht, als überflüssig geltend, wieder mittels des primärseitigen Rücklaufs an das Heizkraftwerk zurückgeführt wird.

Es ist bekannt, einem Schichtenspeicher in einem Gebäude mittels verschiedener Wärmequellen Wärme zuzuführen, etwa aus Solarthermie, Photovoltaik, einer Wärmepumpe, und/oder Gas- oder Holzverbrennung.

Eine schlichte Integration von zusätzlichen Wärmequellen in die Sekundärseite eines Fernwärmeheizsystems wurde bislang jedoch vermieden, da zusätzliche Wärmequellen in Konkurrenz zur angelieferten Fernwärme treten und dadurch den Wirkungsgrad des Fernwärmenetzes negativ beeinträchtigen würden. Denn eine erhöhte sekundärseitige Rücklauftemperatur führt zu einer höheren primärseitigen Rücklauftemperatur und demnach zu einer verringerten Energieabgabe, wie weiter oben beschrieben.

DE 10 2011 103 133A1 betrifft eine Fernwärmekompaktstation, welche einen Heizkreislauf bzw. einen Trinkwasser- und/oder Warmwasserkreislauf bedient, und zur Speicherung ein Pufferspeicher in dem Sekundärkreislauf der Fernwärmekompaktstation gegeben ist.

DE 10 2013 003 206 A1 und DE 202 14 086 U1 betreffen jeweils eine Heizanlage mit Merkmalen aus dem Oberbegriff des Anspruchs 1.

Aufgabe der vorliegenden Erfindung ist daher, ein Fernwärmeheizsystem mit Überschuss-Einspeisung sowie ein Verfahren und ein Computerprogrammprodukt zur Regelung eines solchen Systems bereitzustellen, in welchem die Einspeisung zusätzlicher thermischer Energie auf der Sekundärseite besser in das Fernwärmeheizsystem integriert ist.

Diese Aufgabe wird durch das Fernwärmeheizsystem, das Verfahren und das Computerprogrammprodukt mit den Merkmalen der jeweiligen unabhängigen Ansprüche gelöst.

Bereitgestellt wird demnach ein Fernwärmeheizsystem für ein Gebäude. Das Fernwärmeheizsystem umfasst eine Fernwärme-Übergangsstation, eine versorgerseitige Primärseite, eine Sekundärseite, wobei die Sekundärseite angepasst ist, an einer Fernwärme-Übergabestation gebäudeseitig Fernwärme von einer versorgerseitigen Primärseite entgegenzunehmen. Das Fernwärmeheizsystem umfasst zudem einen Überschuss-Einspeiser. Der Überschuss-Einspeiser umfasst eine hydraulische Einbindung in die Sekundärseite und ist angepasst, zumindest einer wärmeabführenden Einheit der Sekundärseite zusätzliche thermische Energie bereitzustellen. Hierbei ist die bereitgestellte thermische Energie gemäß einer vorbestimmten Priorisierungsfolge an mehrere wärmeabführende Einheiten der Sekundärseite verteilbar, wobei die Sekundärseite mehrere wärmeabführende Einheiten umfasst, wobei die wärmeabführenden Einheiten in einer Reihe angeordnet sind und die stromabwärts erste wärmeabführende Einheit der Reihe ein Wärmespeicher ist. Stromabwärts sind mehrere wärmeabführende Einheiten der Sekundärseite als Heizkreis ausgebildet. Der Überschuss-Einspeiser stellt mittels der hydraulischen Einbindung dem Wärmespeicher gemäß der vorbestimmten Priorisierungsfolge vorrangig zusätzliche thermische Energie bereit. Zusätzlich umfasst ist ein Regler, wobei der Regler angepasst ist, eine Heizkreis-Solltemperatur eines vorbestimmten Heizkreises anzupassen, um, sofern der Wärmespeicher durchgeladen ist, eine zwangsweise Abfuhr der zusätzlichen thermischen Energie, die vom Überschuss-Einspeiser bereitgestellt ist, zu ermöglichen.

Die zusätzliche thermische Energie unterscheidet sich von der Fernwärme in ihrem Ursprung, und ist daher in Bezug auf die Fernwärme zusätzlich. Das Fernwärmeheizsystem ist dadurch gekennzeichnet, dass der Überschuss-Einspeiser angepasst ist, die thermische Energie mittels einer hydraulischen Einbindung in die Sekundärseite bereitzustellen.

Demnach ist die thermische Energie des Überschuss-Einspeisers erstmals nicht nur lokal, wie etwa in einen einzelnen Wärmespeicher, sondern gesamtheitlich in die Sekundärseite eingebunden. Hierzu wird die Wärmeenergie des Überschuss-Einspeisers in die Sekundärseite hydraulisch, also in ein Medium der Sekundärseite, eingespeist. Die zusätzliche thermische Energie ist mittels eines Anschlusses an den Hauptkreislauf der Sekundärseite in die Sekundärseite hydraulisch eingebunden. Dies heißt, dass die zusätzliche thermische Energie unabhängig von der Primärseite direkt in die Sekundärseite eingespeist wird. Mit anderen Worten: Die zusätzliche thermische Energie des Überschuss-Einspeisers und die Fernwärme der Fernwärme-Übergabestation werden somit mittels eines gemeinsamen Mediums durch die Sekundärseite transportiert und auf der Sekundärseite verteilt.

Dies hat den Vorteil, dass die eingespeiste thermische Energie des Überschuss-Einspeisers somit auf der Sekundärseite an wärmeabführende Einheiten verteilt werden kann. Auf diese Weise kann einer Erhöhung der sekundärseitigen Rücklauftemperatur bei aktiver Überschuss-Einspeisung entgegengewirkt werden, wodurch unnötige Kosten beim Fernwärmeversorger vermieden werden können.

Als wärmeabführende Einheit wird hierbei jede Einheit bzw. Einrichtung des Sekundärkreislaufs bezeichnet, welche von dem (gemeinsamen) Medium der Sekundärseite durchflossen wird und hierbei Wärme aus dem (gemeinsamen) Medium der Sekundärseite abführt. Beispiele für wärmeabführende Einheiten sind demnach etwa Boiler, Pufferspeicher und Heizkreise.

In einer vorteilhaften Ausgestaltung der Erfindung umfasst der Überschuss-Einspeiser ein Mischmittel. Das Mischmittel ist angepasst, die Temperatur eines Mediums des Überschuss-Einspeisers auf einen vorbestimmten Vorlaufsollwert zu regeln, so dass das Medium die zusätzliche thermische Energie umfasst.

Vorteilhafterweise ist der Überschuss-Einspeiser angepasst, der zumindest einen wärmeabführenden Einheit, die zusätzliche thermische Energie mittels einer Vordruckpumpe bereitzustellen.

Die Bereitstellung der thermischen Energie des Überschuss-Einspeisers mittels einer Vordruckpumpe hat den Vorteil, dass die zumindest eine wärmeabführende Einheit die thermische Wärme des Überschuss-Einspeisers vorrangig vor einer der Sekundärseite bereitgestellten Fernwärme entgegennehmen kann. Während die thermische Energie des Überschuss-Einspeisers durch den Vordruck und der hydraulischen Einbindung des Überschuss-Einspeisers direkt, also ohne weitere technische Maßnahme, in die zumindest eine wärmeabführende Einheit geleitet werden kann, erfordert die Aufnahme von Fernwärme aus dem sekundärseitigen Vorlauf einen von einer Ladepumpe erzeugten Unterdruck. Dabei kann die Leistung der Ladepumpe derart geregelt werden, dass die Fernwärme die Bereitstellung von thermischer Energie an die zumindest eine wärmeabführende Einheit (bei Bedarf) flankierend ergänzt.

Vorteilhafterweise umfasst das Fernwärmeheizsystem ein erstes Rückschlagventil, wobei das erste Rückschlagventil auf der Sekundärseite zwischen der Fernwärme-Übergabestation und dem Überschuss-Einspeiser angeordnet ist.

Das erste Rückschlagventil hat den Vorteil, dass die Fernwärme-Übergabestation und der Überschuss-Einspeiser auf der Sekundärseite hydraulisch entkoppelt sind. Dadurch kann eine Fehlzirkulation auf der Sekundärseite, welche die Fernwärme-Übergabestation negativ beeinflussen könnte, vermieden werden. Das bedeutet, dass die vom Überschuss-Einspeiser mittels der Vordruckpumpe bereitgestellte zusätzliche thermische Energie von der Fernwärme-Übergabestation vollständig entkoppelt ist, und direkt der zumindest einen wärmeabführenden Einheit der Sekundärseite zugeführt werden kann.

Die vorbestimmte Priorisierungsfolge der wärmeabführenden Einheiten gemäß der Erfindung hat den Vorteil, dass die zusätzliche thermische Energie gezielt an wärmeabführende Einheiten der Sekundärseite verteilt werden kann - auch falls der Überschuss-Einspeiser mehr zusätzliche Wärmeenergie bereitstellt als vom Wärmespeicher der Sekundärseite benötigt. Schließlich sind das Vorhandensein und die Menge von zusätzlicher Wärmeenergie des Überschuss-Einspeisers in der Regel unterschiedlich verteilt.

Dabei begünstigt die vorbestimmte Priorisierungsfolge die Beibehaltung eines möglichst großen Temperaturunterschieds zwischen dem sekundärseitigen Vorlauf und dem sekundärseitigen Rücklauf. Dadurch wird eine niedrige Temperatur im primärseitigen Rücklauf gewährleistet, wodurch die Energiebilanz des Fernwärmeversorgers wirtschaftlich bleiben kann, und zwar unabhängig davon, ob die Überschuss-Einspeisung in die Sekundärseite aktiviert ist.

Vorteilhaft ist es, wenn die zusätzliche thermische Energie einer oberen Schicht des Wärmespeichers zugeführt ist.

Auf diese Weise kann die Beladung des Wärmespeichers unter Beibehaltung eines signifikanten Temperaturgefälles zwischen oberen Schichten des Wärmespeichers und unteren Schichten des Wärmespeichers flexibel und präzise gesteuert werden.

Im Gegensatz zu einer herkömmlichen Einbindung von zusätzlichen Heizquellen in einen Wärmespeicher - nämlich im mittleren bis unteren Bereich des Wärmespeichers, um die zusätzliche Wärme einem möglichst großen Nutzvolumen zuzuführen - bleiben Temperaturschichten im Wärmespeicher zu einem erheblichen Anteil erhalten. Ein im Wärmespeicher vorliegendes Schichtsystem wird durch die Wärmezufuhr aus dem Überschuss-Einspeiser also nicht gestört.

Dies hat den Vorteil, dass ein für den effizienten Betrieb erforderliches signifikantes Temperaturgefälle im Wärmespeicher erhalten bleibt, wodurch die Temperatur des Mediums im sekundärseitigen Rücklauf auf einem möglichst niedrigen Niveau gehalten werden kann.

Das Mischmittel kann ein Heizungsmischer sein. Alternativ kann das Mischmittel eine Einspritzschaltung sein oder als geregelte Pumpe ausgestaltet sein.

Die mittels des Reglers einstellbare zwangsweise Abfuhr von zusätzlicher thermischer Energie des Überschuss-Einspeisers, die auf der Sekundärseite nicht benötigt wird und somit als überflüssig gilt, hat den Vorteil, dass der sekundärseitige Rücklauf nicht zusätzlich erwärmt wird.

Üblicherweise ist auch der primärseitige Durchfluss an der Fernwärme-Übergabestation durch den Regler geregelt. Somit kann der Regler die Fernwärmezufuhr zumindest teilweise reduzieren, während zusätzliche Wärmeenergie von einem Überschuss-Einspeiser in die Sekundärseite eingekoppelt wird. Somit können ungenutzte Einheiten von Fernwärme vermieden werden, wodurch insbesondere aufgrund der kubischen Skalierung der Pumpleistung zum Transport von Fernwärme erhebliche Kosten beim Fernwärmeversorger eingespart werden können.

In herkömmlichen Fernwärmeheizsystemen bekommen weder der Regler noch der Versorger direkt mit, wenn zusätzliche Wärme in den Sekundärkreis eingespeist wird, worunter die Energiebilanz des Versorgers leidet, da ungebrauchte Fernwärme wieder abtransportiert werden muss.

Durch die hydraulische Einbindung der vom Überschuss-Einspeiser bereitgestellten zusätzlichen thermischen Energie und einer korrespondierenden Regelung der Sekundärseite gemäß einer vorbestimmten Priorisierungsfolge kann somit ein im Wesentlichen konstanter Wirkungsgrad der Fernwärmeversorgung erreicht werden.

Die vorbestimmte Priorisierungsfolge ist abhängig von der konkreten Ausgestaltung der Sekundärseite, und wird nachfolgend in Bezug zu den Figuren erläutert.

Vorteilhaft ist dabei, wenn der Wärmespeicher ein erster Boiler für einen Warmwasserkreislauf ist. Der erste Boiler ist mittels eines ersten Umschaltventils in die Sekundärseite hydraulisch eingebunden. Das erste Umschaltventil ist angepasst, den Überschuss-Einspeiser zwischen einem sekundärseitigen Rücklauf und einem Rücklauf des ersten Boilers umzuschalten.

Der Regler ist angepasst, das erste Umschaltventil auf den Rücklauf des ersten Boilers zu stellen, wenn ein Temperatursignal eines ersten Temperatursensors, der an einer unteren Schicht des ersten Boilers angeordnet ist, unter einem vorbestimmten Boiler-Ausschaltwert liegt. Sofern das Temperatursignal des ersten Temperatursensors den vorbestimmten Boiler-Ausschaltwert übersteigt, ist der Regler angepasst, das erste Umschaltventil auf den sekundärseitigen Rücklauf zu stellen um die zwangsweise Abfuhr der zusätzlichen thermischen Energie zu ermöglichen.

Weiterhin vorteilhaft ist es, wenn auf der Sekundärseite ein zweiter Boiler stromabwärts nach dem ersten Boiler mittels eines zweiten Umschaltventils in die Sekundärseite hydraulisch eingebunden ist. Das zweite Umschaltventil ist angepasst, den Überschuss-Einspeiser zwischen dem sekundärseitigen Rücklauf und einem Rücklauf des zweiten Boilers umzuschalten. Der zweite Boiler folgt in der vorbestimmten Priorisierungsfolge nach dem ersten Boiler.

Der Regler ist angepasst, das zweite Umschaltventil auf den Rücklauf des zweiten Boilers zu stellen, wenn ein Temperatursignal eines zweiten Temperatursensors, der an einer unteren Schicht des zweiten Boilers angeordnet ist, unter dem vorbestimmten Boiler-Ausschaltwert liegt und das erste Umschaltventil auf den sekundärseitigen Rücklauf gestellt ist. Sofern das Temperatursignal des zweiten Temperatursensors den vorbestimmten Boiler-Ausschaltwert übersteigt, ist der Regler angepasst, das erste Umschaltventil und das zweite Umschaltventil auf den sekundärseitigen Rücklauf zu stellen um die zwangsweise Abfuhr der zusätzlichen thermischen Energie zu ermöglichen.

Alternativ kann auf der Sekundärseite ein Pufferspeicher stromabwärts nach dem ersten Boiler parallel mittels eines zweiten Rückschlagventils hydraulisch eingebunden sein. Der Pufferspeicher folgt in der vorbestimmten Priorisierungsfolge nach dem ersten Boiler, d.h. der Pufferspeicher wird nur dann vom Überschuss-Einspeiser nachgeladen, wenn das erste Umschaltventil auf den sekundärseitigen Rücklauf gestellt ist.

Am Pufferspeicher ist ein zuweisbarer Temperatursensor, vorzugsweise an einer unteren Schicht des Pufferspeichers, angeordnet. Üblicherweise sind an einem Pufferspeicher mehrere Temperatursensoren angeordnet, wobei der Nutzer hiervon einen Temperatursensor auswählen kann. Dem zuweisbaren Temperatursensor ist ein vorbestimmter Puffer-Fixwert zugeordnet. Der Puffer-Fixwert ist auf Anforderungen der von dem Pufferspeicher gespeisten wärmeabführenden Einheiten variabel einstellbar.

Hierbei ist der Regler angepasst, die Heizkreis-Solltemperatur eines vorbestimmten Heizkreises anzupassen, um die zwangsweise Abfuhr der zusätzlichen thermischen Energie zu ermöglichen, wenn das Temperatursignal des zuweisbaren Temperatursensors den vorbestimmten Puffer-Fixwert um einen vorkonfigurierten Ladehysteresewert übersteigt. Zur Überschuss-Einspeisung in einen Heizkreis wird der Vorlaufsollwert des Überschuss-Einspeisers entsprechend auf den vorkonfigurierten Heizkreis-Sollwert angepasst.

Nach einem Aspekt der Erfindung ist der stromabwärts erste Wärmespeicher ein Pufferspeicher. Stromabwärts nach dem Pufferspeicher ist ein Boiler in die Sekundärseite hydraulisch eingebunden. Der Pufferspeicher ist in der vorbestimmten Priorisierungsfolge vor dem Boiler. Der Boiler ist mittels einer Boiler-Ladepumpe mit thermischer Energie aus dem Pufferspeicher beladbar.

Am Pufferspeicher ist ein zuweisbarer Temperatursensor, vorzugsweise an einer unteren Schicht des Pufferspeichers, angeordnet. Dem zuweisbaren Temperatursensor ist ein vorbestimmter Puffer-Fixwert zugeordnet.

Hierbei ist der Regler angepasst, die Boiler-Ladepumpe zu aktivieren und den Vorlaufsollwert des Überschuss-Einspeisers auf den Boiler-Sollwert abzustimmen, um die zwangsweise Abfuhr der zusätzlichen thermischen Energie zu ermöglichen, wenn das Temperatursignal des zuweisbaren Temperatursensors den vorbestimmten Puffer-Fixwert um einen vorkonfigurierten Ladehysteresewert übersteigt.

Sobald der Boiler durchgeladen ist (Temperatursignal des zweiten Temperatursensors übersteigt die Boiler-Ausschalttemperatur) und das Temperatursignal des zuweisbare Temperatursensors des Pufferspeichers den vorbestimmten Puffer-Fixwert um den vorkonfigurierten Ladehysteresewert weiterhin übersteigt, beginnt die Zwangsabführung der Heizkreise.

Nach einem vorteilhaften Aspekt der Erfindung ist der Überschuss-Einspeiser angepasst, das Medium mittels einer mit Sonnenenergie betriebenen Wärmequelle zu erhitzen.

Hierbei kann der Überschuss-Einspeiser als elektrische Heizpatrone bzw. E-Patrone ausgestaltet sein.

Weiter bereitgestellt wird demnach ein Verfahren zur Regelung eines erfindungsgemäßen Fernwärmeheizsystems. Das Verfahren umfasst eine Aktivierung der Vordruckpumpe des Überschuss-Einspeisers. Weiter umfasst das Verfahren eine Regelung des Mischmittels des Überschuss-Einspeisers. Das Mischmittel regelt die Temperatur des Mediums des Überschuss-Einspeisers auf den vorbestimmten Vorlaufsollwert. Darüber hinaus umfasst das Verfahren eine Beladung eines Wärmespeichers. Für die Beladung des Wärmespeichers ist der Überschuss-Einspeiser gegenüber der Fernwärme-Übergabestation hydraulisch bevorzugt. Hierbei begrenzt der Regler die Beladung des Wärmespeichers durch die Fernwärme-Übergabestation auf einen vorbestimmten Minimaltemperaturwert des Wärmespeichers. Der vorbestimmte Minimaltemperaturwert kann einen Hysteresewert, z.B. 2 K, umfassen. Ferner umfasst das Verfahren eine Zwangsabführung der bereitgestellten thermischen Energie des Überschuss-Einspeisers. Dazu passt der Regler die Heizkreis-Solltemperatur des vorbestimmten Heizkreises an. Insbesondere erhöht der Regler die Heizkreis-Solltemperatur des vorbestimmten Heizkreises. Dadurch kann die vom Überschuss-Einspeiser bereitgestellte thermische Energie dem vorbestimmten Heizkreis zugeleitet werden, sofern ein gemäß der Priorisierungsfolge vorrangiger Wärmespeicher durchgeladen ist.

Auf der Sekundärseite erfolgt ein hydraulischer Ausgleich zwischen eines von der Ladepumpe des Wärmespeichers angeforderten Volumenstroms und eines von der Vordruckpumpe des Überschuss-Einspeisers bereitgestellten Volumenstroms. Der Wärmespeicher wird mit der Summe der beiden Volumenströme beladen. Durch die hydraulische Bevorzugung des bereitgestellten Volumenstroms gegenüber des angeforderten Volumenstroms kann die Leistung der Fernwärme-Übergabestation reduziert werden, ohne hierzu einen der Fernwärme-Übergabestation zugeordneten Vorlaufsollwert aktiv zu regeln.

Die Begrenzung der Aufladung des Wärmespeichers durch die Fernwärme-Übergabestation bewirkt, dass mehr zusätzliche Energie durch den Überschuss-Einspeiser in den Wärmespeicher eingebracht werden kann.

Vorteilhafterweise ist der Wärmespeicher ein erster Boiler, wobei der Regler zur Beladung des ersten Boilers mittels der vom Überschuss-Einspeiser bereitgestellten thermischen Energie das erste Umschaltventil auf den Rücklauf des ersten Boilers stellt. Hierbei umfasst das Verfahren ferner ein Umschalten des ersten Umschaltventils von dem Rücklauf des ersten Boilers auf den sekundärseitigen Rücklauf, sofern der erste Boiler durchgeladen ist, um gemäß der vorbestimmten Priorisierungsfolge weiterzuschalten.

Bereitgestellt wird ferner ein alternativer Betriebsmodus, nach welchem der Regler angepasst ist, ein primärseitiges Ventil zu schließen, wodurch der Fernwärme Durchfluss und somit die Anlieferung der Fernwärme erheblich gesenkt wird, wobei eine Frostschutzfunktion des Fernwärmeheizsystems aufrechterhalten bleibt.

Ferner bereitgestellt wird ein Computerprogrammprodukt, das angepasst ist, das erfindungsgemäße Verfahren in dem Regler des erfindungsgemäßen Fernwärmeheizsystems auszuführen.

Die Erfindung wird im Folgenden anhand von Ausführungsbeispielen und der Zeichnung näher beschrieben. In der Zeichnung zeigen:
- Fig. 1: ein Fernwärmeheizsystem mit einer Überschuss-Einspeisung in einen ersten Boiler als Wärmespeicher gemäß einem Ausführungsbeispiel der Erfindung;
- Fig. 2: ein Fernwärmeheizsystem mit einer Überschuss-Einspeisung sowohl in einen ersten Boiler als auch in einen zweiten Boiler gemäß einer Ausgestaltung der Erfindung;
- Fig. 3: ein Fernwärmeheizsystem mit einer Überschuss-Einspeisung in einen ersten Boiler, und einem Pufferspeicher als Wärmespeicher gemäß einem Ausführungsbeispiel der Erfindung; und
- Fig. 4: ein Fernwärmeheizsystem mit Überschuss-Einspeisung in einen Pufferspeicher, und einem Boiler gemäß einer Ausgestaltung der Erfindung.

Für alle Ausgestaltungen der Erfindung und Figuren sind unabhängig von der konkreten Ausgestaltung auf der Sekundärseite jeweils eine Fernwärme-Übergabestation 10, ein Überschuss-Einspeiser 30 und ein Regler 50 vorhanden.

Die Fernwärme-Übergabestation 10, nachfolgend auch Übergabestation 10, koppelt in einem Fernwärmeheizsystem 1 den Primärkreislauf 11 mit dem Sekundärkreislauf 12, beispielsweise mittels eines Wärmetauschers. Somit kann Fernwärme von einem versorgerseitigen Primärkreislauf 11 auf der Sekundärseite in einen verbraucherseitigen Sekundärkreislauf 12 eingekoppelt werden. Sowohl der Primärkreislauf 11 als auch der Sekundärkreislauf 12 weisen einen Vorlauf und einen Rücklauf auf. Auf der Sekundärseite werden der Vorlauf und der Rücklauf von einem sekundärseitigen Medium durchströmt. Das sekundärseitige Medium weist typischerweise im Vorlauf eine erheblich höhere Temperatur als im Rücklauf auf.

Das sekundärseitige Medium kann etwa Wasser, insbesondere für Heizsysteme aufbereitetes Wasser, sein. Alternativ kann ein heißes Medium im Vorlauf auch Wasserdampf sein. Dann bildet sich im sekundärseitigen Rücklauf ein Kondensat, welches Fernwärme an der Übergabestation aufnehmen kann.

Ferner umfasst das Fernwärmeheizsystem 1 erfindungsgemäß einen Überschuss-Einspeiser 30. Der Überschuss-Einspeiser 30 ist mittels eines Mischmittels 33 in die Sekundärseite hydraulisch eingebunden und stellt zusätzliche thermische Energie bzw. Wärmeenergie bereit. Insbesondere ist der Überschuss-Einspeiser 30 in den Sekundärkreislauf 12 der Sekundärseite hydraulisch eingebunden. Die zusätzliche Wärmeenergie des Überschuss-Einspeisers 30 kann mit Vordruck in den sekundärseitigen Vorlauf überführt werden. Das heißt, dass das sekundärseitige Medium, also jenes Medium, das die Fernwärme auf der Sekundärseite verteilt, auch die zusätzliche thermische Energie transportiert (und verteilt).

Durch die hydraulische Einbindung wird der Überschuss-Einspeiser 30 ein Teil des sekundärseitigen Kreislaufs 12. Das bedeutet, dass das sekundärseitige Medium im Überschuss-Einspeiser 30 die bereitgestellte Wärmenergie aufnehmen kann und stromabwärts in bzw. durch die Sekundärseite leiten kann.

Der Überschuss-Einspeiser 30 umfasst zudem eine Heizquelle 31 und ein Gefäß 32. Durch Regelung des Mischmittels 33 und des Vordrucks kann ein Kreislauf zur Überschusseinspeisung, kurz Überschuss-Kreislauf, gebildet werden. Der Vordruck kann etwa mittels einer Vordruckpumpe 34 erzeugt werden.

Der Überschuss-Einspeiser 30 ist dazu angepasst, mittels der Heizquelle 31 und des Mischmittels 33 die Temperatur des Mediums des sekundärseitigen Rücklaufs in dem Gefäß 32 anzuheben. Dadurch kann der Überschuss-Einspeiser 30 ein Medium mit einer auf einen Vorlaufsollwert geregelten Temperatur bereitstellen. Bei einem aktivierten Überschuss-Kreislauf kann mittels des heißen Mediums zusätzliche Wärmeenergie in die Sekundärseite hydraulisch eingebracht bzw. eingekoppelt werden.

Die Heizquelle 31 des Überschuss-Einspeisers 30 kann als elektrische Heizpatrone bzw. E-Patrone ausgestaltet sein.

Die Heizquelle 31 kann beispielsweise mittels Sonnenenergie gespeist werden, wie etwa durch Solarthermie oder Photovoltaik.

Ferner kann der Überschuss-Einspeiser 30 einen Temperatursensor TF aufweisen. Die Temperatur des Mediums im Gefäß 32 wird durch den Temperatursensor TF erfasst. Somit kann die Anhebung der Temperatur des sekundärseitigen Rücklaufs, kurz Rücklaufanhebung, durch den Überschuss-Einspeiser 30 überwacht werden. Vorteilhafterweise ist der Temperatursensor TF daher derart angeordnet, dass die Temperatur des Mediums in der Nähe der Heizquelle 31 erfasst werden kann.

Das Gefäß 32 des Überschuss-Einspeisers ist so klein, dass das kalte Medium des sekundärseitigen Rücklaufs im Wesentlichen mit einem Durchlauf durch den Überschuss-Einspeiser erhitzt wird. Das Gefäß 32 ist nicht als Zwischenspeicher des heißen Mediums vorgesehen.

Mittels des Mischmittels 33 kann die Rücklaufanhebung durch den Überschuss-Einspeiser 30 auf den Vorlaufsollwert geregelt werden. Der Vorlaufsollwert korrespondiert zu der Solltemperatur einer ausgewählten wärmeabführenden Einheit. Der Vorlaufsollwert kann etwa auf einen Wärmespeicher-Ladesollwert oder einen Heizkreis-Sollwert abgestimmt sein, oder ein vorkonfigurierter Fixwert sein. Der vorbestimmte Vorlaufsollwert kann ferner einen vorbestimmten Hysterese-Differenzwert umfassen, zum Beispiel 10 K.

In der Regel ist stromabwärts die erste wärmeabführende Einheit der Sekundärseite ein Wärmespeicher, etwa ein Brauchwasserboiler, ein Brauchwasserspeicherladesystem oder ein Pufferspeicher, ggfs. mit nachgeschaltetem Frischwassermodul. Weitere, stromabwärts angeordnete wärmeabführende Einheiten sind beispielsweise Heizkreise. Details zur Temperaturregelung werden in Bezug auf die konkreten Ausgestaltungen der Erfindung erläutert.

Zur Regelung umfasst das Fernwärmeheizsystem 1 einen Regler 50 (nicht gezeigt). In der Praxis kann der Regler 50 vom Fernwärmeversorger bereitgestellt werden. Der Regler ist dazu angepasst, die Verteilung der mittels der hydraulischen Einbindung des Überschuss-Einspeisers 30 der Sekundärseite zugeführten Wärmeenergie zu regeln. Dazu kann der Regler 50 den Überschuss-Kreislauf aktivieren, etwa durch Aktivierung der Vordruckpumpe 34. Insbesondere ist der Regler auch angepasst, das Mischmittel 33 zu regeln.

Das Mischmittel 33 kann ein Heizungsmischer sein. Ferner kann das Mischmittel ein Mischventil bzw. 3-Wege-Ventil sein. Das Mischmittel 33 kann auch als Einspritzschaltung ausgestaltet sein (nicht gezeigt).

Eine Mischung des vom Überschuss-Einspeiser 30 bereitgestellten heißen Mediums mit dem sekundärseitigen Rücklauf im Überschuss-Kreislauf kann auch mittels einer zusätzlichen Pumpe im sekundärseitigen Rücklauf erfolgen (nicht gezeigt). Somit kann die Mischregelung auf eine Drehzahlregelung der zusätzlichen Pumpe abgestellt werden.

Ferner regelt der Regler 50 üblicherweise ein primärseitiges Ventil. Das primärseitige Ventil regelt den Durchfluss des primärseitigen Vorlaufs, und kontrolliert damit die Fernwärmeanlieferung. Somit kann der Regler die Leistung der Übergabestation bei aktiver Überschuss-Einspeisung anpassen, insbesondere reduzieren.

Nach einem Aspekt der Erfindung ist eine vorbestimmte Priorisierungsfolge bzw. Priorisierungsregelung vorgesehen, anhand welcher die vom Überschuss-Einspeiser 30 bereitgestellte zusätzliche Wärmeenergie auf der Sekundärseite verteilt wird. Die vorbestimmte Priorisierungsfolge wird vom Regler umgesetzt und hängt von der konkreten Ausgestaltung der Sekundärseite ab.

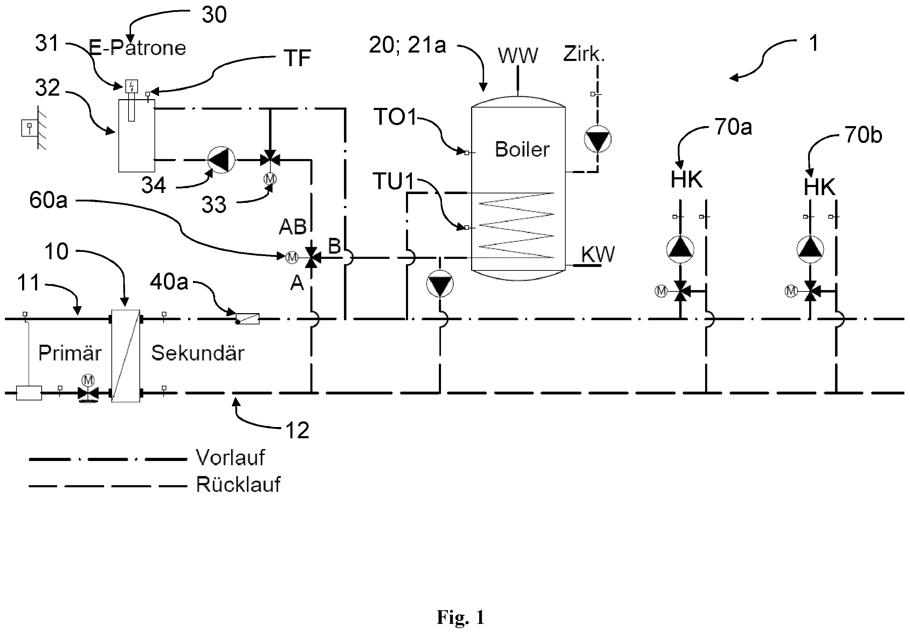

Fig. 1 zeigt ein Ausführungsbeispiel eines Fernwärmeheizsystems mit Überschuss-Einspeisung gemäß der Erfindung.

Das in Fig. 1 illustrierte Ausführungsbeispiel des Fernwärmeheizsystems 1 umfasst sekundärseitig einen Wärmespeicher 20, hier als erster Boiler 21a ausgestaltet. Der erste Boiler 21a dient auf der Verbraucherseite der Bereitstellung von warmem Brauchwasser (WW). Hierzu kann das Brauchwasser im Boiler 21a über einen Vorlauf mittels Fernwärme und/oder Wärmeenergie aus dem Überschuss-Einspeiser 30 aufgeheizt bzw. beladen werden.

Der erste Boiler 21a ist mittels eines ersten Umschaltventils 60a und einer ersten Boiler-Ladepumpe in die Sekundärseite hydraulisch eingebunden.

Der erste Boiler 21a weist einen ersten Temperatursensor TU1 auf, der an einer unteren Schicht des ersten Boilers angeordnet ist. Dem ersten Temperatursensor ist ein vorbestimmter Boiler-Ausschaltwert zugeordnet.

Ferner weist der erste Boiler 21a einen Temperatursensor TO1 auf, der an einer oberen Schicht des ersten Boilers angeordnet ist. Dem Temperatursensor TO1 sind ein vorbestimmter Boiler-Sollwert und ein vorbestimmter Boiler-Minimalwert zugeordnet.

Der Überschuss-Kreislauf wird vom Regler 50 aktiviert, d.h. der Überschuss-Einspeiser 30 speist Wärmeenergie in den Wärmespeicher 20 ein, wenn das vom Temperatursensor TF des Überschuss-Einspeisers 30 empfangene Temperatursignal über dem Vorlaufsollwert liegt. Hierzu wird mittels der Vordruckpumpe 34 ein Kreislauf durch den Überschuss-Einspeiser 30 aktiviert. Im Überschuss-Einspeiser 30 wird das kalte Medium des sekundärseitigen Rücklaufs kontinuierlich mittels der Heizquelle 31 und des Mischmittels 33 auf die Temperatur des vorbestimmten Vorlaufsollwerts erhitzt und in die Sekundärseite, insbesondere in den sekundärseitigen Vorlauf, hydraulisch eingespeist.

In diesem Ausführungsbeispiel korrespondiert der vorbestimmte Vorlaufsollwert des Überschuss-Einspeisers 30, z.B. 65 °C, zu dem vorbestimmten Boiler-Sollwert, z.B. 55 °C. Hierbei kann der vorbestimmte Vorlaufsollwert einen Hysterese-Differenzwert umfassen, z.B. 10 °C.

Gemäß einem Aspekt der Erfindung bleibt der Überschuss-Kreislauf für eine vordefinierte Mindestlaufzeit nach dessen Aktivierung aktiv. Der Regler 50 kann den Überschuss-Kreislauf nach Ablauf der vordefinierten Mindestlaufzeit wieder deaktivieren, sofern das Temperatursignal des Temperatursensors TF des Überschuss-Einspeisers 30 unter den Vorlaufsollwert gefallen ist.

Nach einem Aspekt der Erfindung hat die Wärmezufuhr des Überschuss-Einspeisers 30 Vorrang gegenüber der Fernwärmezufuhr durch die Fernwärme-Übergabestation 10. Dieser Vorrang folgt aus der hydraulischen Einbindung des Überschuss-Einspeisers in die Sekundärseite mit Vordruck. Somit kann die vom Überschuss-Einspeiser bereitgestellte Wärmeenergie direkt, also auch ohne einer aktivierten ersten Boiler-Ladepumpe, von einem Wärmespeicher aufgenommen werden. Hierbei ergänzt die mittels Unterdruck aus dem sekundärseitigen Vorlauf aufgenommene Fernwärme die vom Überschuss-Einspeiser bereitgestellte Wärmeenergie flankierend.

Bei paralleler Beladung des Boilers von der Fernwärme-Übergabestation und von dem Überschuss-Einspeiser ist der Regler 50 darüber hinaus angepasst, den Temperaturwert, auf welchen die Fernwärme-Übergabestation den Boiler laden soll (Boiler-Sollwert für die Fernwärme-Übergabestation) zu reduzieren. Beispielsweise kann die Beladung des Boilers durch die Fernwärme-Übergabestation auf einen Temperaturwert knapp über dem vorkonfigurierten Boiler-Minimalwert eingestellt werden. Dadurch kann eine Nachladung durch Fernwärme verzögert werden bzw. der Boiler durch Fernwärme weniger weit aufgeladen werden, wodurch mehr zusätzliche Energie durch den Überschuss-Einspeiser in den Boiler eingebracht werden kann. Bei aktiver Überschuss-Einspeisung wird mittels der Fernwärme lediglich die Temperatur in einer oberen Schicht des ersten Boilers 21a um den Boiler-Minimalwert gehalten. Die Beladung des Boilers durch die Fernwärme-Übergabestation wird in Folge dessen früher als herkömmlich abgeschlossen.

Beispielsweise können der Boiler-Sollwert auf 55 °C und der Boiler-Minimalwert auf 45 °C konfiguriert sein. Bei aktiver Überschusseinspeisung justiert der Regler 50 die (Speicher)Solltemperatur für den Temperatursensor TO1 des Boilers automatisch auf den Boiler-Minimalwert und einer kleinen Hysteresedifferenz, also etwa auf 47 °C. Die Nachladung des ersten Boilers 21a durch die Fernwärme-Übergabestation startet nur dann, wenn das Temperatursignal des Temperatursensors TO1 unter den Boiler-Minimalwert sinkt. Übersteigt das Temperatursignal des Temperatursensors TO1 den Boiler-Minimalwert dagegen wieder, wird die Nachladung durch die Fernwärme-Übergabestation beendet, wobei der Ladesollwert, also die sekundärseitige Solltemperatur der Fernwärme-Übergabestation, nicht verändert wird. Hierzu stellt der Regler die erste Boiler-Ladepumpe ab. Demnach beginnt die Nachladung durch die Fernwärme-Übergabestation bei aktiver Überschuss-Einspeiser erst später und endet früher. Somit wird entsprechend der primärseitige Fernwärmezufluss, welcher aufgrund der Nachladung angefordert wird, aufgrund einer erheblich kürzeren Ladezeit reduziert. Die verbleibende Nachladung, also idealerweise bis auf den Boiler-Sollwert von 55 °C, erfolgt mittels des Überschuss-Einspeisers 30. Das Temperatursignal des Temperatursensors TO1 kann bei aktiver Überschuss-Einspeisung den Boiler-Sollwert von 55°C auch übersteigen, da eine Durchladung, also ein vollständig geladener Boiler bzw. Wärmespeicher, dadurch erkannt wird, dass das Temperatursignal des Temperatursensors TU1 den vorkonfigurierten Boiler-Ausschaltwert übersteigt.

Zwischen dem Überschuss-Einspeiser 30 und der Fernwärme-Übergabestation 10 ist ein erstes Rückschlagventil 40a im sekundärseitigen Vorlauf vorgesehen. Somit kann verhindert werden, dass Wärme des Überschuss-Einspeisers 30 an die Fernwärme-Übergabestation 10 geleitet wird.

Die zusätzliche Wärme des Überschuss-Einspeisers 30 kann mittels eines heißen Mediums durch den sekundärseitigen Vorlauf direkt in eine obere Schicht des Wärmespeichers 20 geleitet werden. Dies hat den Vorteil, dass eine Durchmischung von Schichten im Wärmespeicher 20 möglichst gering gehalten wird, und damit ein möglichst signifikantes Temperaturgefälle zwischen den unteren Schichten des Wärmespeichers 20 und den oberen Schichten des Wärmespeichers 20 erhalten bleibt.

Gemäß einem Aspekt der Erfindung ist eine vorbestimmte Priorisierungsfolge der wärmeabführenden Einheiten der Sekundärseite vorgesehen. In der konkreten Ausgestaltung des Sekundärkreislaufs nach Fig. 1 sieht die vorbestimmte Priorisierungsfolge vor, dass bei aktivem Überschuss-Kreislauf zunächst der erste Boiler 21a geladen wird, bis dieser vollgeladen ist. Der erste Boiler gilt als vollgeladen, wenn das Temperatursignal des ersten Temperatursensors TU1 den vorbestimmten Boiler-Ausschaltwert übersteigt. Anschließend wird, sofern der Überschuss-Kreislauf weiter aktiv ist, die Wärme des Überschuss-Einspeisers 30 von einem vorbestimmten Heizkreis 70a zwangsabgeführt. Hierbei legt der Benutzer fest, welche Heizkreise zwangsabführen dürfen, und welche nicht. Insbesondere bieten sich Fußbodenheizkreise für eine Zwangsabführung von Wärmeenergie des Überschuss-Einspeisers an. Sofern alle in Betracht gezogenen Heizkreise aktiviert wurden, und dennoch weiter überschüssige Wärmeenergie vom Überschuss-Einspeiser 30 bereitgestellt werden kann, erhöht sich die Temperatur des vom Überschuss-Einspeiser 30 bereitgestellten Mediums. Sobald die Temperatur des vom Überschuss-Einspeiser 30 bereitgestellten Mediums auf einen im Überschuss-Einspeiser 30 festgelegten Maximalwert steigt, deaktiviert sich der Überschuss-Einspeiser 30 automatisch, d.h. ohne Eingriff des Reglers 50, um Schaden am Überschuss-Einspeiser zu vermeiden.

Zur Zwangsabführung von überschüssiger Wärme an Heizkreise 70a ist in dem Ausführungsbeispiel des erfindungsgemäßen Fernwärmeheizsystems der Fig. 1 ein erstes Umschaltventil 60a vorgesehen. Das erste Umschaltventil 60a hat zwei Eingänge, A und B, und einen gemeinsamen Ausgang AB, wobei zwischen den Eingängen A und B umgeschaltet werden kann. In diesem Ausführungsbeispiel repräsentiert der Eingang A den sekundärseitigen Rücklauf und der Eingang B den Rücklauf des ersten Boilers 21a.

In der Stellung AB-B des ersten Umschaltventils 60a kann der Boiler 21a parallel zur Übergabestation 10 aus dem Überschuss-Einspeiser 30 nachgeladen bzw. beladen werden. Eine Boilernachladung durch die Fernwärme-Übergabestation erfolgt bis zu einem vorbestimmten Boiler-Minimalwert am oberen Temperatursensor TO1. Die Boilernachladung durch die Fernwärme gilt als abgeschlossen, wenn das Temperatursignal des oberen Temperatursensors TO1 den Boiler-Minimalwert um einen Hysteresewert, z.B. 2K, übersteigt.

Hat der Temperatursensor TU1 den definierten Ausschaltpunkt überschritten, ist bei einem weiterhin aktiven Überschuss-Einspeiser 30 gemäß der vorbestimmten Priorisierungsfolge vorgesehen, das erste Umschaltventil 60a auf die Stellung AB-A, also auf den sekundärseitigen Rücklauf, zu stellen.

In der Stellung AB-A des ersten Umschaltventils 60a kann die zusätzliche Wärmeenergie des Überschuss-Einspeisers 30 an dem Wärmespeicher 20 bzw. dem Boiler 21a auf der Sekundärseite vorbeigeführt werden. Ein Aspekt der Erfindung sieht in diesem Fall vor, einen vorbestimmten Heizkreis 70a zwangsweise zu aktivieren, um die überschüssige Wärme zu verbrauchen. Der Heizkreis 70a wird also zwangsweise aktiviert, falls dieser nicht bereits aktiv ist. Hierbei regelt der Regler 50 die Vorlaufsolltemperatur des Heizkreises, kurz Heizkreis-Sollwert, des ausgewählten Heizkreises 70a auf einen frei einstellbaren Fixwert. Üblicherweise ist der Fixwert niedriger gewählt als ein Heizkreis-Sollwert bei kälteren Außentemperaturen. Die nicht ausgewählten Heizkreise 70b bleiben inaktiv.

Für die zwangsweise Überschussabführung passt der Regler 50 zudem die Vorlaufsolltemperatur des Überschuss-Einspeisers auf den Heizkreis-Sollwert, ggfs. mit einem kleinen Hysteresebeitrag, an.

Die zwangsweise Überschussabführung erzeugt einen entscheidenden Vorteil für den Fall eines Überangebots an zusätzlicher Wärme durch den Überschuss-Einspeiser 30: Falls der Überschuss-Einspeiser 30 mehr Wärme als zum Nachladen eines oder mehrerer Wärmespeicher 20 benötigt liefert, wird die überschüssige Wärme nicht aufgrund einer erhöhten Rücklauftemperatur indirekt an das Heizkraftwerk des Versorgers zurückgeführt, sondern lokal, d.h. auf der Sekundärseite, verbraucht.

Nach einem Aspekt der Erfindung kann die zwangsweise Überschussabführung durch Heizkreise 70a deaktiviert werden, wenn die betroffenen Heizkreise in einen regulären Betriebsstatus nach Heizkurve, also z.B. Tagbetrieb bzw. Nachtabsenkung, übergehen.

Ferner kann die zwangsweise Überschussabführung vom Regler 50 deaktiviert werden, wenn das Temperatursignal des Temperaturfühlers TF des Überschuss-Einspeisers 30 unter die Vorlaufsolltemperatur fällt und/oder eine Boilernachladung angefordert wird. Eine Boilernachladung wird entsprechend der vorbestimmten Priorisierungsfolge priorisiert. Zur Nachladung des Boilers 21a wird das erste Umschaltventil 60a wieder entsprechend auf die Stellung AB-B gestellt.

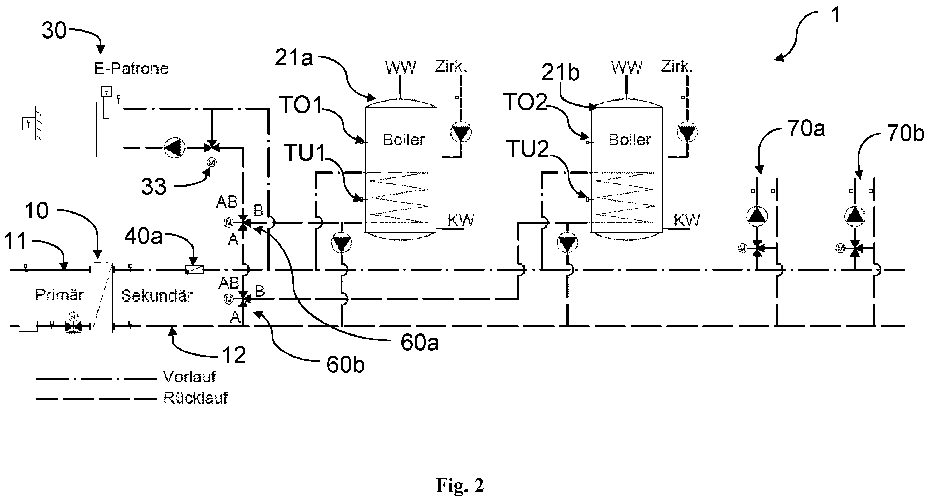

**Fig. 2** zeigt ein Fernwärmeheizsystem mit einer Überschuss-Einspeisung sowohl in einen ersten Boiler als auch in einen zweiten Boiler gemäß einer Ausgestaltung der Erfindung.

Im Unterschied zum Ausführungsbeispiel der Fig. 1 umfasst die Ausgestaltung der Fig. 2 zwei Wärmespeicher 20, wobei die beiden Wärmespeicher 20 als ersten Boiler 21a und zweiten Boiler 21b ausgestaltet sind. Dabei ist es vorgesehen, den ersten Boiler 21a und den zweiten Boiler 21b hydraulisch in Reihe zu schalten, sodass der zweite Boiler 21b stromabwärts nach dem ersten Boiler 21a angeordnet ist. Dadurch kann bei einer Überschuss-Einspeisung der erste Boiler 21a vor dem zweiten Boiler 21b nachgeladen werden. Die Zwangsabführung eines Wärmeüberschusses ist erst vorgesehen, wenn beide Boiler 21a; 21b vollständig geladen sind.

Der zweite Boiler 21b ist mittels eines zweiten Umschaltventils 60b und einer zweiten Boiler-Ladepumpe in die Sekundärseite hydraulisch eingebunden. Das zweite Umschaltventil 60b kann den Überschuss-Einspeiser 30 zwischen dem sekundärseitigen Rücklauf auf den Rücklauf des zweiten Boilers 21b umschalten. Analog zum ersten Boiler 21a weist auch der zweite Boiler 21b einen Temperatursensor TO2, der an einer oberen Schicht des zweiten Boilers 21b angeordnet ist und einen zweiten Temperatursensor TU2, der an einer unteren Schicht des zweiten Boilers 21b angeordnet ist, auf.

Die Auswahl des zu ladenden Boilers 21a; 21b wird vom Regler 50 durch entsprechende Stellungen des ersten Umschaltventils 60a und des zweiten Umschaltventils 60b gesteuert.

Zur Regelung der Überschuss-Einspeisung in der Ausgestaltung der Fig. 2 wird auf die vorstehende Beschreibung zur Fig. 1 verwiesen.

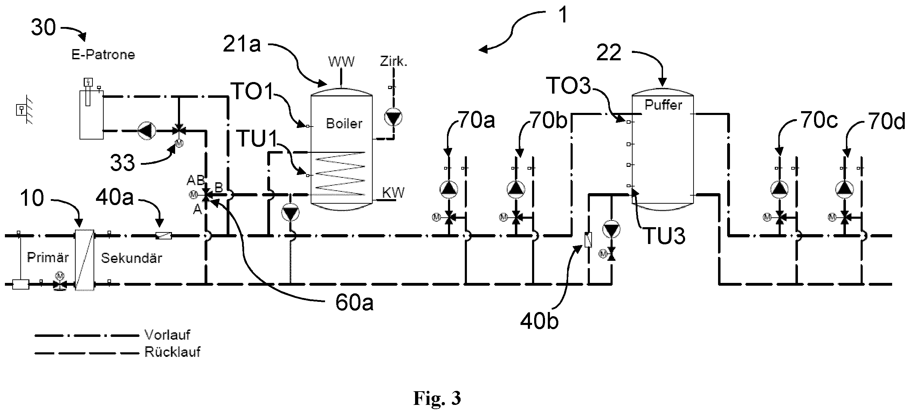

**Fig. 3** zeigt ein Fernwärmeheizsystem mit einer Überschuss-Einspeisung in einen ersten Boiler, und einem Pufferspeicher als Wärmespeicher gemäß einem Ausführungsbeispiel der Erfindung.

Im Vergleich zum Ausführungsbeispiel der Erfindung in Fig. 1 umfasst die Ausgestaltung des erfindungsgemäßen Fernwärmeheizsystems der Fig. 3 zusätzlich einen Pufferspeicher 22, welcher hydraulisch zwischen die Heizkreise 70a; 70b; 70c; 70d eingebunden ist.

Der Pufferspeicher 22 ist üblicherweise als Schichtenspeicher ausgestaltet. Hierbei kann ein für einen wirtschaftlichen Betrieb signifikantes Temperaturgefälle zwischen den obersten Schichten, in denen heißes Medium aus dem sekundärseitigen Vorlauf eingefüllt wird, und den untersten Schichten, aus welchen kaltes Medium entnommen wird, erzeugt werden.

In der konkreten Ausgestaltung der Sekundärseite nach Fig. 3 sieht die vorbestimmte Prioritätsregelung vor, dass bei aktivem Überschuss-Kreislauf zunächst der erste Boiler 21a geladen wird, bis dieser vollgeladen ist. Anschließend wird, sofern der Überschuss-Kreislauf weiter aktiv ist, der Pufferspeicher 22 geladen, bis dieser vollgeladen ist. Der Pufferspeicher 22 gilt als vollgeladen, wenn das Temperatursignal eines zuweisbaren Temperatursensors TU3, etwa an einer unteren Schicht des Pufferspeichers, einen vorbestimmten Puffer-Fixwert übersteigt. Erst danach wird die Wärme des Überschuss-Einspeisers 30 von dem vorbestimmten Heizkreis 70a und 70c zwangsabgeführt. Sofern alle in Betracht gezogenen Heizkreise aktiviert wurden, und dennoch weiter zusätzliche thermische Energie vom Überschuss-Einspeiser bereitgestellt werden kann, erhöht sich die Temperatur des vom Überschuss-Einspeiser 30 bereitgestellten Mediums. Sobald die Temperatur des vom Überschuss-Einspeiser 30 bereitgestellten Mediums auf einen im Überschuss-Einspeiser 30 festgelegten Maximalwert steigt, deaktiviert sich der Überschuss-Einspeiser 30 automatisch und von selbst.

Der Pufferspeicher 22 umfasst einen Temperatursensor TO3, der an einer oberen Schicht des Pufferspeichers angeordnet ist. Dem Temperatursensor TO3 des Pufferspeichers ist ein vorbestimmter Puffer-Sollwert zugeordnet. Für die Beladung des Pufferspeichers kann der Vorlaufsollwert des Überschuss-Einspeisers auf den um eine Ladehysterese erhöhten Puffer-Sollwert abgestimmt werden.

Der Pufferspeicher 22 fordert eine Nachladung von der Fernwärme-Übergabestation an, wenn ein Temperatursignal des Temperatursensors TO3 unter den vorbestimmten Puffer-Sollwert, umfassend eine Ladehysterese, fällt. Hierzu aktiviert der Regler 50 die Puffer-Ladepumpe und das Pufferladeventil.

Zur Beladung des Pufferspeichers 22 mittels Überschuss-Einspeiser 30 regelt das Mischmittel 33 die Temperatur des vom Überschuss-Einspeisers 30 bereitgestellten heißen Mediums auf den vorbestimmten Puffer-Sollwert. Hierzu ist der Vorlaufsollwert des Überschuss-Einspeisers 30 auf den Puffer-Sollwert abgestimmt.

Zur Umsetzung der Priorisierungsfolge sind am Pufferspeicher ein zuweisbarer Temperatursensor TU3 und der diesem Temperatursensor TU3 zugeordnete vorbestimmte Puffer-Fixwert vorgesehen. Der zuweisbare Temperatursensor TU3 kann aus einer Mehrzahl an Temperatursensoren, die an unterschiedlichen Schichten des Pufferspeichers angeordnet sind, ausgewählt werden. Üblicherweise wird ein Temperatursensor ausgewählt, der an einer unteren Schicht des Pufferspeichers angeordnet ist. Sofern nur eine geringere Beladung des Pufferspeichers 22 gewünscht ist, kann als zuweisbarer Temperatursensor TU3 auch ein Temperatursensor an einer mittleren oder oberen Schicht des Pufferspeichers konfiguriert werden. Sobald der Temperaturwert des zuweisbaren Temperatursensors über den Puffer-Fixwert steigt, ist der Pufferspeicher 22 vollgeladen.

Erreicht der Pufferspeicher 22 bei aktiver Überschuss-Einspeisung den vollgeladenen Zustand, ist nach einem Aspekt der Erfindung vorgesehen, die vom Überschuss-Einspeiser hydraulisch eingespeiste Wärmeenergie über die vorbestimmten Heizkreise 70a; 70c zwangsweise abzuführen.

Damit der Pufferspeicher 22 über den Vordruck des Überschuss-Kreislaufs geladen werden kann, ist gemäß einem Aspekt der Erfindung ein zweites Rückschlagventil 40b vorgesehen. Das zweite Rückschlagventil 40b ist parallel zur Puffer-Ladepumpe und dem Ladeventil des Pufferspeichers 22 angeordnet. Das zweite Rückschlagventil 40b ermöglicht einen sekundärseitigen Rücklauf vom Pufferspeicher 22 während einer Nachladung des Pufferspeichers durch den Überschuss-Einspeiser 30.

Parallel zur Beladung durch den Überschuss-Einspeiser 30 kann der Pufferspeicher 22 durch die Fernwärme-Übergabestation 10 wie oben beschrieben nachgeladen werden, insbesondere falls eine ausreichende Energieversorgung stromabwärts nachgeschalteter (Heiz)Kreise nicht mehr gewährleistet werden kann. Die Beladung mittels Fernwärme wird im Vergleich zum herkömmlichen Ladeverhalten beendet, wenn das Temperatursignal des Temperatursensors TO3 den Puffer-Sollwert, insbesondere um einen Hysteresewert von 2 K, übersteigt. In diesem Fall wird die Ladepumpe deaktiviert und das Ladeventil geschlossen.

Die Heizkreise 70a; 70b im Sekundärkreis stromaufwärts von dem Pufferspeicher 22 richten ihre Energieanforderung an die Übergabestation 10 bzw. den Überschuss-Einspeiser 30. Die Heizkreise 70c; 70d im Sekundärkreis stromabwärts von dem Pufferspeicher 22 richten ihre Energieanforderung den Pufferspeicher 22. Zur zwangsweisen Abführung von überschüssiger Wärme bei vollgeladenem Pufferspeicher 22 kann der Regler grundsätzlich jeden Heizkreis 70a; 70b; 70c; 70d aktivieren, wobei in der Praxis wie vorstehend beschrieben nur vom Benutzer bestimmte Heizkreise aktiviert werden.

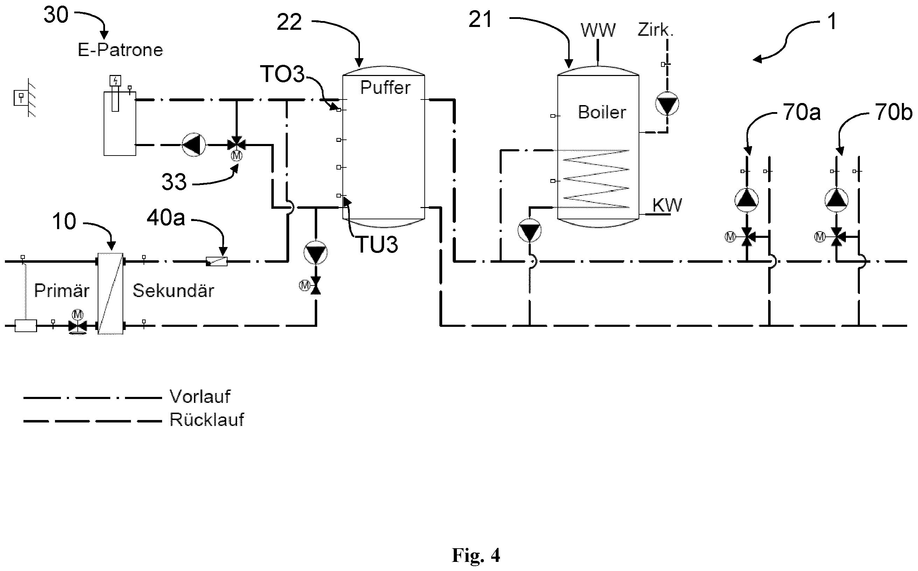

**Fig. 4** zeigt ein Fernwärmeheizsystem mit Überschuss-Einspeisung in einen Pufferspeicher, und einem Boiler gemäß einer Ausgestaltung der Erfindung.

Im Unterschied zu den vorstehend beschriebenen Ausführungsbeispielen der Erfindung zeigt Fig. 4 ein Ausführungsbeispiel, nach welchem die Überschuss-Einspeisung nicht direkt in einen Boiler 21a; 21b erfolgt, sondern direkt in einen Pufferspeicher 22. Die hydraulische Einbindung eines Pufferspeichers 22 erfordert dabei kein Umschaltventil, da überschüssige Wärme aus dem Pufferspeicher im sekundärseitigen Vorlauf weitergeleitet würde, und somit nicht direkt in den sekundärseitigen Rücklauf eingespeist wird.

In der konkreten Ausgestaltung des Sekundärkreises nach Fig. 4 sieht die vorbestimmte Prioritätsregelung vor, dass bei aktivem Überschuss-Kreislauf zunächst der Pufferspeicher 22 geladen wird, bis dieser vollgeladen ist. Anschließend oder bereits parallel wird, sofern der Überschuss-Kreislauf weiter aktiv ist, der Boiler 21 über den Pufferspeicher 22 geladen, bis der Boiler 21c vollgeladen ist. Erst danach wird weiter eingespeiste Wärme des Überschuss-Einspeisers 30 von einem vorbestimmten Heizkreis 70a zwangsabgeführt. Sofern alle in Betracht gezogenen Heizkreise aktiviert wurden, und dennoch weiter überschüssige Wärmeenergie vom Überschuss-Einspeiser bereitgestellt werden kann, erhöht sich die Temperatur des vom Überschuss-Einspeiser 30 bereitgestellten Mediums. Sobald die Temperatur des vom Überschuss-Einspeiser 30 bereitgestellten Mediums auf einen im Überschuss-Einspeiser 30 festgelegten Maximalwert steigt, deaktiviert sich der Überschuss-Einspeiser 30 automatisch und von selbst, wie vorstehend beschrieben.

Im Gegensatz zu den hydraulischen Einbindungen der Boiler 21a; 21b in den Fig. 1 bis 3 wird der Boiler 21 im Ausführungsbeispiel der Fig. 4 ohne Umschaltventil parallel zu den Heizkreises eingebunden.

Zur Nachladung des Boilers 21 über den Pufferspeicher 22 kann der Regler 50 die Boiler-Ladepumpe aktivieren.

In allen gezeigten Ausführungsbeispielen kann die Temperatur des sekundärseitigen Rücklaufs an der Fernwärme-Übergabestation durch den Betriebsmodus der Zwangsabführung von Wärmeüberschuss möglichst gering gehalten werden. Somit kann ein relativ großer Unterschied zwischen der sekundärseitigen Vorlauftemperatur und der sekundärseitigen Rücklauftemperatur erzielt werden. Durch die hydraulische Einbindung des Überschuss-Einspeiser 30 in die Sekundärseite kann dessen bereitgestellte Wärme auf der Sekundärseite individuell verteilt werden und in ausgewählten Heizkreisen 70a lokal abgeführt werden. Dadurch bleibt auch bei aktiver Überschuss-Einspeisung gewährleistet, dass sich der Wirkungsgrad der Fernwärmeversorgung, wenn überhaupt, nur sehr unwesentlich verschlechtert.

Ferner kann unabhängig von der konkreten Ausgestaltung der Sekundärseite ein Hauptbetriebsmodus "nur Überschuss" vorgesehen sein. In diesem Hauptbetriebsmodus können Wärmespeicher 20, wie etwa Boiler 21a; 21b und/oder Pufferspeicher 22, nur vom Überschuss-Einspeiser 30 beladen werden. Der Fernwärmebeitrag kann vom Regler 50 in diesem Hauptbetriebsmodus erheblich gesenkt werden bzw. mit Ausnahme der Frostschutzfunktion deaktiviert werden.

### Bezugszeichenliste

- 1: Fernwärmeheizsystem
- 10: Fernwärme-Übergabestation
- 11: Primärkreislauf
- 12: Sekundärkreislauf
- 20: Wärmespeicher
- 21: Boiler
- 21a; 21b: Erster bzw. zweiter Boiler
- 22: Pufferspeicher
- 30: Überschuss-Einspeiser
- 31: Heizquelle
- 32: Gefäß
- 33: Mischmittel
- 34: Vordruckpumpe
- 40a: erstes Rückschlagventil
- 40b: zweites Rückschlagventil
- 50: Regler
- 60: Umschaltventil
- 70a; 70c: ausgewählte Heizkreise für die zwangsweise Überschussabführung
- 70b; 70d: Heizkreise, die nicht für die Überschussabführung ausgewählt sind
- TU1; TU2: Erster bzw. zweiter Temperatursensor, an einer unteren Schicht des ersten Boiler 21a bzw. zweiten Boilers 21b angeordnet
- TO1; TO2: Temperatursensor, an einer oberen Schicht des ersten Boiler 21a bzw. zweiten Boilers 21b angeordnet
- TO3; TU3: Temperatursensoren des Pufferspeichers 22
- TF: Temperatursensor des Überschuss-Einspeisers 30

## Patentansprüche

1. Fernwärmeheizsystem (1) für ein Gebäude, umfassend
eine Fernwärme-Übergangsstation,
eine versorgerseitige Primärseite,
eine Sekundärseite, wobei die Sekundärseite angepasst ist, an der Fernwärme-Übergabestation (10) gebäudeseitig Fernwärme von der versorgerseitigen Primärseite entgegenzunehmen,
einen Überschuss-Einspeiser (30), wobei der Überschuss-Einspeiser (30) angepasst ist, zumindest einer wärmeabführenden Einheit der Sekundärseite zusätzliche thermische Energie bereitzustellen,
wobei die zusätzliche thermische Energie einen von der Fernwärme unterschiedlichen Ursprung hat,
der Überschuss-Einspeiser (30) eine hydraulische Einbindung in die Sekundärseite umfasst und der Überschuss-Einspeiser (30) angepasst ist, die zusätzliche thermische Energie mittels der hydraulischen Einbindung in die Sekundärseite bereitzustellen,
**dadurch gekennzeichnet, dass**
die zusätzliche thermische Energie gemäß einer vorbestimmten Priorisierungsfolge an mehrere wärmeabführende Einheiten der Sekundärseite verteilbar ist,
wobei die Sekundärseite mehrere wärmeabführende Einheiten umfasst, wobei die wärmeabführenden Einheiten in einer Reihe angeordnet sind und die stromabwärts erste wärmeabführende Einheit der Reihe ein Wärmespeicher (20, 21a, 22) ist, wobei stromabwärts mehrere wärmeabführende Einheiten als Heizkreis ausgebildet sind, und wobei der Überschuss-Einspeiser (30) mittels der hydraulischen Einbindung dem Wärmespeicher (20, 21a, 22) gemäß der vorbestimmten Priorisierungsfolge vorrangig zusätzliche thermische Energie bereitstellt,
zusätzlich umfassend einen Regler (50), wobei der Regler (50) angepasst ist, eine Heizkreis-Solltemperatur eines vorbestimmten Heizkreises (70a; 70c) anzupassen, um, sofern der Wärmespeicher (20, 21a, 22) durchgeladen ist, eine zwangsweise Abfuhr der zusätzlichen thermischen Energie, die vom Überschuss-Einspeiser (30) bereitgestellt ist, zu ermöglichen.

2. Fernwärmeheizsystem nach Anspruch 1, wobei der Überschuss-Einspeiser (30) ein Mischmittel (33) umfasst, wobei das Mischmittel (33) angepasst ist, die Temperatur eines Mediums des Überschuss-Einspeisers (30) auf einen vorbestimmten Vorlaufsollwert zu regeln, sodass das Medium die zusätzliche thermische Energie umfasst.

3. Fernwärmeheizsystem nach einem der vorhergehenden Ansprüche, wobei der Überschuss-Einspeiser (30) angepasst ist, der zumindest einen wärmeabführenden Einheit die zusätzliche thermische Energie mittels einer Vordruckpumpe (34) bereitzustellen, und wobei das Fernwärmeheizsystem (1) ferner ein Rückschlagventil (40a) umfasst, wobei das Rückschlagventil (40a) auf der Sekundärseite zwischen der Fernwärme-Übergabestation (10) und dem Überschuss-Einspeiser (30) angeordnet ist, um die Fernwärme-Übergabestation (10) und den Überschuss-Einspeiser (30) hydraulisch zu entkoppeln.

4. Fernwärmeheizsystem nach einem der vorhergehenden Ansprüche, wobei die zusätzliche thermische Energie einer oberen Schicht des Wärmespeichers (20) zugeführt ist.

5. Fernwärmeheizsystem nach einem der vorhergehenden Ansprüche, wobei der Wärmespeicher (20) ein erster Boiler (21a) für einen Warmwasserkreislauf ist, wobei der erste Boiler (21a)
mittels eines ersten Umschaltventils (60a) in die Sekundärseite hydraulisch eingebunden ist, wobei das erste Umschaltventil (60a) angepasst ist, den Überschuss-Einspeiser (30) zwischen einem sekundärseitigen Rücklauf und einem Rücklauf des ersten Boilers (21a) umzuschalten,
wobei der Regler (50) angepasst ist, das erste Umschaltventil (60a) auf den Rücklauf des ersten Boilers (21a) zu stellen, wenn ein Temperatursignal eines ersten Temperatursensors (TU1), der an einer unteren Schicht des ersten Boilers (21a) angeordnet ist, unter einem vorbestimmten Boiler-Ausschaltwert liegt, und das erste Umschaltventil (60a) auf den sekundärseitigen Rücklauf zu stellen um die zwangsweise Abfuhr der zusätzlichen thermischen Energie zu ermöglichen, wenn das Temperatursignal des ersten Temperatursensors (TU1) den vorbestimmten Boiler-Ausschaltwert übersteigt.

6. Fernwärmesystem nach dem vorhergehenden Anspruch, wobei auf der Sekundärseite ein zweiter Boiler (21b) stromabwärts nach dem ersten Boiler (21a) mittels eines zweiten Umschaltventils (60b) in die Sekundärseite hydraulisch eingebunden ist, wobei das zweite Umschaltventil (60b) angepasst ist, den Überschuss-Einspeiser (30) zwischen dem sekundärseitigen Rücklauf und einem Rücklauf des zweiten Boilers (21b) umzuschalten, wobei der zweite Boiler (21b) in der vorbestimmten Priorisierungsfolge nach dem ersten Boiler (21a) folgt,
wobei der Regler (50) angepasst ist, das zweite Umschaltventil (60b) auf den Rücklauf des zweiten Boilers (21a) zu stellen, wenn ein Temperatursignal eines zweiten Temperatursensors (TU2), der an einer unteren Schicht des zweiten Boilers (21b) angeordnet ist, unter dem vorbestimmten Boiler-Ausschaltwert liegt und das erste Umschaltventil (60a) auf den sekundärseitigen Rücklauf gestellt ist, und das erste Umschaltventil (60a) und das zweite Umschaltventil (60b) auf den sekundärseitigen Rücklauf zu stellen um die zwangsweise Abfuhr der zusätzlichen thermischen Energie zu ermöglichen, wenn das Temperatursignal des zweiten Temperatursensors (TU2) den vorbestimmten Boiler-Ausschaltwert übersteigt.

7. Fernwärmesystem nach Anspruch 6, wobei auf der Sekundärseite ein Pufferspeicher (22) stromabwärts nach dem ersten Boiler (21a) parallel mittels eines Rückschlagventils hydraulisch eingebunden ist, wobei der Pufferspeicher (22) in der vorbestimmten Priorisierungsfolge nach dem ersten Boiler (21a) folgt, wobei am Pufferspeicher (22) ein zuweisbarer Temperatursensor (TU3), vorzugsweise an einer unteren Schicht des Pufferspeichers, angeordnet ist, wobei dem zuweisbaren Temperatursensor (TU3) ein vorbestimmter Puffer-Fixwert zugeordnet ist, wobei der Regler angepasst ist, die Heizkreis-Solltemperatur eines vorbestimmten Heizkreises (70a; 70c) anzupassen, um die zwangsweise Abfuhr der zusätzlichen thermischen Energie zu ermöglichen, wenn das Temperatursignal des zuweisbaren Temperatursensors (TU3) den vorbestimmten Puffer-Fixwert übersteigt.

8. Fernwärmesystem nach einem der Ansprüche 2 bis 7, wobei der Wärmespeicher (20) ein Pufferspeicher (22) ist und stromabwärts nach dem Pufferspeicher (22) ein Boiler (21c) in die Sekundärseite hydraulisch eingebunden ist, wobei der Pufferspeicher (22) in der vorbestimmten Priorisierungsfolge vor dem Boiler (21c) ist, und der Boiler (21c) mittels einer Boiler-Ladepumpe mit thermischer Energie aus dem Pufferspeicher (22) beladbar ist, wobei am Pufferspeicher (22) ein zuweisbarer Temperatursensor (TU3), vorzugsweise an einer unteren Schicht des Pufferspeichers, angeordnet ist, wobei dem zuweisbaren Temperatursensor (TU3) ein vorbestimmter Puffer-Fixwert zugeordnet ist, wobei der Regler angepasst ist, die Boiler-Ladepumpe zu aktivieren, um die zwangsweise Abfuhr der zusätzlichen thermischen Energie zu ermöglichen, wenn das Temperatursignal des zuweisbaren Temperatursensors (TU3) den vorbestimmten Puffer-Fixwert übersteigt.

9. Fernwärmeheizsystem nach einem der Ansprüche 2 bis 8, wobei der Überschuss-Einspeiser (30) angepasst ist, das Medium mittels einer mit Sonnenenergie betriebenen Wärmequelle (31) zu erhitzen.

10. Verfahren zur Reglung eines Fernwärmeheizsystems (1) nach einem der Ansprüche 1 bis 9, das Verfahren umfassend
eine Aktivierung der Vordruckpumpe (34) des Überschuss-Einspeisers (30),
eine Regelung des Mischmittels (33) des Überschuss-Einspeisers (30), wobei das Mischmittel (33) die Temperatur des Mediums des Überschuss-Einspeiser (30) auf den vorbestimmten Vorlaufsollwert regelt,
eine Beladung des Wärmespeichers (20), wobei für die Beladung des Wärmespeichers der Überschuss-Einspeiser mittels der Vordruckpumpe gegenüber der Fernwärme-Übergabestation hydraulisch bevorzugt ist, und der Regler (50) die Beladung des Wärmespeichers (20) durch die Fernwärme-Übergabestation auf einen vorbestimmten Minimaltemperaturwert des Wärmespeichers (20) begrenzt,
eine Zwangsabführung der bereitgestellten thermischen Energie des Überschuss-Einspeisers (30), wobei der Regler (50) die Heizkreis-Solltemperatur des vorbestimmten Heizkreises (70a; 70c) anpasst, insbesondere erhöht, um die vom Überschuss-Einspeiser (30) bereitgestellte thermische Energie dem vorbestimmten Heizkreis (70a; 70c) zuzuleiten, sofern ein gemäß der vorbestimmten Priorisierungsfolge vorrangiger Wärmespeicher (20) durchgeladen ist,
wobei der Überschuss-Einspeiser (30) die zusätzliche thermische Energie mittels der hydraulischen Einbindung in die Sekundärseite bereitstellt, wobei die zusätzliche thermische Energie gemäß einer vorbestimmten Priorisierungsfolge an mehrere wärmeabführende Einheiten der Sekundärseite verteilt wird,
und wobei der Überschuss-Einspeiser (30) mittels der hydraulischen Einbindung dem Wärmespeicher (20) gemäß der vorbestimmten Priorisierungsfolge vorrangig zusätzliche thermische Energie bereitstellt.

11. Verfahren nach dem Anspruch 10, wobei der Wärmespeicher (20) ein erster Boiler (21a) ist, wobei der Regler (50) zur Beladung des ersten Boilers (21a) mittels der vom Überschuss-Einspeiser (30) bereitgestellten thermischen Energie das erste Umschaltventil (60a) auf den Rücklauf des ersten Boilers (21a) stellt, wobei das Verfahren ferner umfasst:
ein Umschalten des ersten Umschaltventils (60a) von dem Rücklauf des ersten Boilers auf den sekundärseitigen Rücklauf, sofern der erste Boiler (21a) durchgeladen ist, um gemäß der vorbestimmten Priorisierungsfolge weiterzuschalten.

12. Verfahren nach dem Anspruch 10, aufweisend einen vorbestimmten Betriebsmodus, wobei der Regler angepasst ist, in dem vorbestimmten Betriebsmodus ein primärseitiges Ventil zu schließen, sodass eine Anlieferung der Fernwärme erheblich gesenkt ist.

13. Computerprogrammprodukt, das angepasst ist, das Verfahren nach einem der Ansprüche 10 bis 12 in dem Regler (50) des Fernwärmeheizsystems (1) nach einem der Ansprüche 1 bis 9 auszuführen.

## Claims

1. District heating system (1) for a building, comprising
a district heating transfer station,
a supplier-side primary side,
a secondary side, wherein the secondary side is suitable for receiving district heating from the supplier-side primary side at the district heating transfer station (10) on the building side,
a surplus feeder (30), wherein the surplus feeder (30) is suitable for providing additional thermal energy to at least one heat-dissipating unit of the secondary side,
wherein the additional thermal energy has an origin different from the district heating,
the surplus feeder (30) comprises a hydraulic integration into the secondary side and the surplus feeder (30) is suitable for providing the additional thermal energy by means of the hydraulic integration into the secondary side,
**characterized in that**
the additional thermal energy can be distributed to a plurality of heat-dissipating units of the secondary side according to a predetermined prioritization sequence,
wherein the secondary side comprises a plurality of heat-dissipating units, wherein the heat-dissipating units are arranged in a row and the first downstream heat-dissipating unit of the row is a heat accumulator (20, 21a, 22), wherein a plurality of downstream heat-dissipating units are designed as a heating circuit, and wherein the surplus feeder (30) provides additional thermal energy to the heat accumulator (20, 21a, 22) as a priority according to the predetermined prioritization sequence by means of the hydraulic integration,
additionally comprising a controller (50), wherein the controller (50) is suitable for adjusting a heating circuit target temperature of a predetermined heating circuit (70a; 70c) in order to enable a forced removal of the additional thermal energy provided by the surplus feeder (30) if the heat accumulator (20, 21a, 22) is fully loaded.

2. District heating system according to claim 1, wherein the surplus feeder (30) comprises a mixing means (33), wherein the mixing means (33) is suitable for controlling the temperature of a medium of the surplus feeder (30) to a predetermined flow setpoint so that the medium comprises the additional thermal energy.

3. District heating system according to any one of the preceding claims, wherein the surplus feeder (30) is suitable for providing the additional thermal energy to the at least one heat-dissipating unit by means of a pre-pressure pump (34), and wherein the district heating system (1) further comprises a check valve (40a), wherein the check valve (40a) is arranged on the secondary side between the district heating transfer station (10) and the surplus feeder (30) in order to hydraulically decouple the district heating transfer station (10) and the surplus feeder (30).

4. District heating system according to any one of the preceding claims, wherein the additional thermal energy is supplied to an upper layer of the heat accumulator (20).

5. District heating system according to any one of the preceding claims, wherein the heat accumulator (20) is a first boiler (21a) for a hot water circuit, wherein the first boiler (21a)
is hydraulically integrated into the secondary side by means of a first switching valve (60a), wherein the first switching valve (60a) is suitable for switching the surplus feeder (30) between a secondary-side return flow and a return flow of the first boiler (21a),
wherein the controller (50) is suitable for setting the first switching valve (60a) to the return flow of the first boiler (21a) when a temperature signal from a first temperature sensor (TU1) arranged on a lower layer of the first boiler (21a) is below a predetermined boiler switch-off value, and to set the first switching valve (60a) to the secondary-side return flow to enable the forced removal of the additional thermal energy when the temperature signal from the first temperature sensor (TU1) exceeds the predetermined boiler switch-off value.

6. District heating system according to the preceding claim, wherein on the secondary side a second boiler (21b) is hydraulically integrated into the secondary side downstream of the first boiler (21a) by means of a second switching valve (60b), wherein the second switching valve (60b) is suitable for switching the surplus feeder (30) between the secondary-side return flow and a return flow of the second boiler (21b), wherein the second boiler (21b) follows the first boiler (21a) in the predetermined prioritization sequence,
wherein the controller (50) is suitable for setting the second switching valve (60b) to the return flow of the second boiler (21a) when a temperature signal from a second temperature sensor (TU2) arranged on a lower layer of the second boiler (21b) is below the predetermined boiler switch-off value and the first switching valve (60a) is set to the secondary-side return flow, and for setting the first switching valve (60a) and the second switching valve (60b) to the secondary-side return flow to enable the forced removal of the additional thermal energy when the temperature signal from the second temperature sensor (TU2) exceeds the predetermined boiler switch-off value.

7. District heating system according to claim 6, wherein on the secondary side a buffer tank (22) is hydraulically integrated in parallel downstream of the first boiler (21a) by means of a check valve, wherein the buffer tank (22) follows the first boiler (21a) in the predetermined prioritization sequence, wherein an assignable temperature sensor (TU3) is arranged on the buffer tank (22), preferably on a lower layer of the buffer tank, wherein a predetermined buffer fixed value is associated with the assignable temperature sensor (TU3), wherein the controller is suitable for adapting the heating circuit target temperature of a predetermined heating circuit (70a; 70c) in order to enable the forced removal of the additional thermal energy when the temperature signal from the assignable temperature sensor (TU3) exceeds the predetermined buffer fixed value.

8. District heating system according to any one of claims 2 to 7, wherein the heat accumulator (20) is a buffer tank (22) and a boiler (21c) is hydraulically integrated into the secondary side downstream of the buffer tank (22), wherein the buffer tank (22) is ahead of the boiler (21c) in the predetermined prioritization sequence, and the boiler (21c) can be loaded with thermal energy from the buffer tank (22) by means of a boiler loading pump, wherein an assignable temperature sensor (TU3) is arranged on the buffer tank (22), preferably on a lower layer of the buffer tank, wherein a predetermined buffer fixed value is associated with the assignable temperature sensor (TU3), wherein the controller is suitable for activating the boiler loading pump in order to enable the forced removal of the additional thermal energy when the temperature signal from the assignable temperature sensor (TU3) exceeds the predetermined buffer fixed value.

9. District heating system according to any one of claims 2 to 8, wherein the surplus feeder (30) is suitable for heating the medium by means of a heat source (31) powered by solar energy.

10. Method for controlling a district heating system (1) according to any one of claims 1 to 9, the method comprising
activation of the pre-pressure pump (34) of the surplus feeder (30),
control of the mixing means (33) of the surplus feeder (30), wherein the mixing means (33) controls the temperature of the medium of the surplus feeder (30) to the predetermined flow setpoint,
loading of the heat accumulator (20), wherein, for the loading of the heat accumulator, the surplus feeder via the pre-pressure pump is hydraulically preferred over the district heating transfer station, and the controller (50) limits the loading of the heat accumulator (20) by the district heating transfer station to a predetermined minimum temperature value of the heat accumulator (20),
forced removal of the thermal energy provided by the surplus feeder (30), wherein the controller (50) adjusts the heating circuit target temperature of the predetermined heating circuit (70a; 70c), in particular increases it, in order to supply the thermal energy provided by the surplus feeder (30) to the predetermined heating circuit (70a; 70c), provided that a heat accumulator (20) having priority according to the predetermined prioritization sequence is fully loaded,
wherein the surplus feeder (30) provides the additional thermal energy by means of the hydraulic integration into the secondary side, wherein the additional thermal energy is distributed to a plurality of heat-dissipating units of the secondary side according to a predetermined prioritization sequence,
and wherein the surplus feeder (30) provides additional thermal energy as a priority to the heat accumulator (20) by means of the hydraulic integration according to the predetermined prioritization sequence.

11. Method according to claim 10, wherein the heat accumulator (20) is a first boiler (21a), wherein the controller (50) sets the first switching valve (60a) to the return flow of the first boiler (21a) in order to load the first boiler (21a) by means of the thermal energy provided by the surplus feeder (30), wherein the method further comprises:
switching the first switching valve (60a) from the return flow of the first boiler to the secondary-side return flow, if the first boiler (21a) is fully loaded, in order to make further switches according to the predetermined prioritization sequence.

12. Method according to claim 10, comprising a predetermined operating mode, wherein the controller is suitable for closing a primary-side valve in the predetermined operating mode, so that a delivery of the district heating is significantly reduced.

13. Computer program product suitable for carrying out the method according to any one of claims 10 to 12 in the controller (50) of the district heating system (1) according to any one of claims 1 to 9.

## Revendications

1. Système de chauffage urbain (1) pour un bâtiment, comprenant
une station de transfert de chaleur à distance,
un côté primaire côté fournisseur,
un côté secondaire, dans lequel le côté secondaire est adapté pour recevoir, au niveau de la station de transfert de chaleur à distance (10), côté bâtiment, de la chaleur à distance provenant du côté primaire côté fournisseur,
un moyen d'alimentation de surplus (30), dans lequel le moyen d'alimentation de surplus (30) est adapté pour fournir de l'énergie thermique supplémentaire à au moins une unité de dissipation de chaleur du côté secondaire,
dans lequel l'énergie thermique supplémentaire a une origine différente de celle de la chaleur à distance,
le moyen d'alimentation de surplus (30) comprend un moyen d'intégration hydraulique dans le côté secondaire et le moyen d'alimentation de surplus (30) est adapté pour fournir l'énergie thermique supplémentaire au moyen du moyen d'intégration hydraulique dans le côté secondaire,
**caractérisé en ce que**
l'énergie thermique supplémentaire peut être distribuée à plusieurs unités de dissipation de chaleur du côté secondaire conformément à un ordre de priorité prédéterminé,
dans lequel le côté secondaire comprend plusieurs unités de dissipation de chaleur, dans lequel les unités de dissipation de chaleur sont disposées en une rangée et la première unité de dissipation de chaleur en aval de la rangée est un accumulateur de chaleur (20, 21a, 22), dans lequel plusieurs unités de dissipation de chaleur en aval sont réalisées sous forme de circuit de chauffage, et dans lequel le moyen d'alimentation de surplus (30) fournit en priorité de l'énergie thermique supplémentaire à l'accumulateur de chaleur (20, 21a, 22) au moyen du moyen d'intégration hydraulique selon l'ordre de priorité prédéterminé,
comprenant en outre un régulateur (50), dans lequel le régulateur (50) est adapté pour adapter une température de consigne de circuit de chauffage d'un circuit de chauffage (70a ; 70c) prédéterminé afin de permettre, dans la mesure où l'accumulateur de chaleur (20, 21a, 22) est complètement chargé, une dissipation forcée de l'énergie thermique supplémentaire fournie par le moyen d'alimentation de surplus (30).

2. Système de chauffage urbain selon la revendication 1, dans lequel le moyen d'alimentation de surplus (30) comprend un moyen de mélange (33), dans lequel le moyen de mélange (33) est adapté pour réguler la température d'un milieu du moyen d'alimentation de surplus (30) à une valeur de consigne de départ prédéterminée, de sorte que le milieu comprend l'énergie thermique supplémentaire.

3. Système de chauffage urbain selon l'une des revendications précédentes, dans lequel le moyen d'alimentation de surplus (30) est adapté pour fournir l'énergie thermique supplémentaire à l'au moins une unité de dissipation de chaleur au moyen d'une pompe à pression d'admission (34), et dans lequel le système de chauffage urbain (1) comprend en outre une soupape antiretour (40a), dans lequel la soupape antiretour (40a) est disposée sur le côté secondaire entre la station de transfert de chaleur à distance (10) et le moyen d'alimentation de surplus (30) afin de désolidariser hydrauliquement la station de transfert de chaleur à distance (10) et le moyen d'alimentation de surplus (30).

4. Système de chauffage urbain selon l'une des revendications précédentes, dans lequel l'énergie thermique supplémentaire est fournie à une couche supérieure de l'accumulateur de chaleur (20).

5. Système de chauffage urbain selon l'une des revendications précédentes, dans lequel l'accumulateur de chaleur (20) est un premier chauffe-eau (21a) pour un circuit d'eau chaude, dans lequel le premier chauffe-eau (21a)
est intégré hydrauliquement dans le côté secondaire au moyen d'une première soupape de commutation (60a), dans lequel la première soupape de commutation (60a) est adaptée pour commuter le moyen d'alimentation de surplus (30) entre un retour côté secondaire et un retour du premier chauffe-eau (21a),
dans lequel le régulateur (50) est adapté pour placer la première soupape de commutation (60a) sur le retour du premier chauffe-eau (21a) lorsqu'un signal de température d'un premier capteur de température (TU1) disposé sur une couche inférieure du premier chauffe-eau (21a) est inférieur à une valeur de coupure de chauffe-eau prédéterminée, et pour placer la première soupape de commutation (60a) sur le retour côté secondaire pour permettre la dissipation forcée de l'énergie thermique supplémentaire lorsque le signal de température du premier capteur de température (TU1) dépasse la valeur de coupure de chauffe-eau prédéterminée.

6. Système de chauffage urbain selon la revendication précédente, dans lequel, sur le côté secondaire, un second chauffe-eau (21b) est intégré hydrauliquement dans le côté secondaire en aval du premier chauffe-eau (21a) au moyen d'une seconde soupape de commutation (60b), dans lequel la seconde soupape de commutation (60b) est adaptée pour commuter le moyen d'alimentation de surplus (30) entre le retour côté secondaire et un retour du second chauffe-eau (21b), dans lequel le second chauffe-eau (21b) suit le premier chauffe-eau (21a) dans l'ordre de priorité prédéterminé,
dans lequel le régulateur (50) est adapté pour placer la seconde soupape de commutation (60b) sur le retour du second chauffe-eau (21a) lorsqu'un signal de température d'un second capteur de température (TU2) disposé sur une couche inférieure du second chauffe-eau (21b) est inférieur à la valeur de coupure de chauffe-eau prédéterminée et que la première soupape de commutation (60a) est placée sur le retour côté secondaire, et pour placer la première soupape de commutation (60a) et la seconde soupape de commutation (60b) sur le retour côté secondaire pour permettre la dissipation forcée de l'énergie thermique supplémentaire lorsque le signal de température du second capteur de température (TU2) dépasse la valeur de coupure de chauffe-eau prédéterminée.

7. Système de chauffage urbain selon la revendication 6, dans lequel, sur le côté secondaire, un réservoir tampon (22) est intégré hydrauliquement en aval du premier chauffe-eau (21a) en parallèle au moyen d'une soupape antiretour, dans lequel le réservoir tampon (22) suit le premier chauffe-eau (21a) dans l'ordre de priorité prédéterminé, dans lequel un capteur de température assignable (TU3) est disposé sur le réservoir tampon (22), de préférence sur une couche inférieure du réservoir tampon, dans lequel une valeur fixe de réservoir tampon prédéterminée est associée au capteur de température assignable (TU3), dans lequel le régulateur est adapté pour régler la température de consigne de circuit de chauffage d'un circuit de chauffage (70a ; 70c) prédéterminé pour permettre la dissipation forcée de l'énergie thermique supplémentaire lorsque le signal de température du capteur de température assignable (TU3) dépasse la valeur fixe de réservoir tampon prédéterminée.

8. Système de chauffage urbain selon l'une des revendications 2 à 7, dans lequel l'accumulateur de chaleur (20) est un réservoir tampon (22) et, en aval du réservoir tampon (22), un chauffe-eau (21c) est intégré hydrauliquement dans le côté secondaire, dans lequel le réservoir tampon (22) est situé avant le chauffe-eau (21c) dans l'ordre de priorité prédéterminé, et le chauffe-eau (21c) peut être chargé en énergie thermique provenant du réservoir tampon (22) au moyen d'une pompe de chargement de chauffe-eau, dans lequel un capteur de température assignable (TU3) est disposé sur le réservoir tampon (22), de préférence sur une couche inférieure du réservoir tampon, dans lequel une valeur fixe de réservoir tampon prédéterminée est associée au capteur de température assignable (TU3), dans lequel le régulateur est adapté pour activer la pompe de chargement de chauffe-eau afin de permettre la dissipation forcée de l'énergie thermique supplémentaire lorsque le signal de température du capteur de température assignable (TU3) dépasse la valeur fixe de réservoir tampon prédéterminée.

9. Système de chauffage urbain selon l'une des revendications 2 à 8, dans lequel le moyen d'alimentation de surplus (30) est adapté pour chauffer le milieu au moyen d'une source de chaleur (31) fonctionnant avec l'énergie solaire.

10. Procédé pour la régulation d'un système de chauffage urbain (1) selon l'une des revendications 1 à 9, le procédé comprenant
une activation de la pompe à pression d'admission (34) du moyen d'alimentation de surplus (30),
une régulation du moyen de mélange (33) du moyen d'alimentation de surplus (30), dans lequel le moyen de mélange (33) régule la température du milieu du moyen d'alimentation de surplus (30) à la valeur de consigne de départ prédéterminée,
un chargement de l'accumulateur de chaleur (20), dans lequel, pour le chargement de l'accumulateur de chaleur, le moyen d'alimentation de surplus au moyen de la pompe à pression d'admission est hydrauliquement préféré à la station de transfert de chaleur à distance, et le régulateur (50) limite le chargement de l'accumulateur de chaleur (20) par la station de transfert de chaleur à distance à une valeur de température minimale prédéterminée de l'accumulateur de chaleur (20),
une dissipation forcée de l'énergie thermique fournie par le moyen d'alimentation de surplus (30), dans lequel le régulateur (50) adapte, en particulier augmente, la température de consigne de circuit de chauffage du circuit de chauffage (70a ; 70c) prédéterminé afin d'acheminer l'énergie thermique fournie par le moyen d'alimentation de surplus (30) vers le circuit de chauffage (70a ; 70c) prédéterminé, dans la mesure où un accumulateur de chaleur (20) prioritaire selon l'ordre de priorité prédéterminé est chargé,
dans lequel le moyen d'alimentation de surplus (30) fournit l'énergie thermique supplémentaire au moyen du moyen d'intégration hydraulique dans le côté secondaire, dans lequel l'énergie thermique supplémentaire est distribuée à plusieurs unités de dissipation de chaleur du côté secondaire selon un ordre de priorité prédéterminé,
et dans lequel le moyen d'alimentation de surplus (30) fournit en priorité de l'énergie thermique supplémentaire à l'accumulateur de chaleur (20) au moyen du moyen d'intégration hydraulique conformément à l'ordre de priorité prédéterminé.

11. Procédé selon la revendication 10, dans lequel l'accumulateur de chaleur (20) est un premier chauffe-eau (21a), dans lequel, pour charger le premier chauffe-eau (21a) au moyen de l'énergie thermique fournie par le moyen d'alimentation de surplus (30), le régulateur (50) place la première soupape de commutation (60a) sur le retour du premier chauffe-eau (21a), dans lequel le procédé comprend en outre :
une commutation de la première soupape de commutation (60a) du retour du premier chauffe-eau au retour côté secondaire, dans la mesure où le premier chauffe-eau (21a) est chargé, afin de continuer à commuter selon l'ordre de priorité prédéterminé.

12. Procédé selon la revendication 10, présentant un mode de fonctionnement prédéterminé, dans lequel le régulateur est adapté pour fermer une soupape côté primaire dans le mode de fonctionnement prédéterminé, de sorte qu'une livraison de la chaleur à distance est considérablement réduite.

13. Produit-programme informatique adapté pour mettre en oeuvre le procédé selon l'une des revendications 10 à 12 dans le régulateur (50) du système de chauffage urbain (1) selon l'une des revendications 1 à 9.
